# EUROPEAN PATENT APPLICATION

(11) **EP 4 779 151 A1**
(43) Date of publication of application: **22.07.2026**
(21) Application number: 26151176.0
(22) Date of filing: 09.01.2026
(51) Int. Cl.: F04B 27/053, F04B 27/04, F04B 39/00, F16C 3/12

(54) **MODULAR PUMP AND PUMP MODULES FOR MODULAR PUMPS**

(30) Priority: 15.01.2025 US 202563745352 P
(71) Applicant: Oxus America, Inc., Auburn Hills, MI 48326 (US)
(72) Inventor: Thompson, Loren M., Lapeer, MI (US); Abusamra, Gary, Rochester Hills, MI (US)
(74) Representative: Forresters IP LLP

(57) **Abstract**

A modular pump (480) for compressible gases includes a first pump module (400a) having a crankcase (102) defining an interior space, a crankshaft (210) extending along a crank axis (204) and supported by the crankcase, a first cylinder assembly (120a) coupled to the crankcase and extending along a first cylinder axis (224a) perpendicular to the crank axis (204), and a second cylinder assembly (120b) coupled to the crankcase (102) and extending along a second cylinder axis (224b) opposite the first cylinder axis (224a). The modular pump (480) also includes a second pump module (400b) arranged axially adjacent to the first pump module (400a) and having a crankshaft extending along the crank axis. The modular pump (480) further includes a coupler (482, 484) connecting the crankshaft of the first pump module to the crankshaft of the second pump module, wherein the coupler defines an angular phase offset between the crankshafts.

## Description

### CROSS-REFERENCE TO RELATED APPLICATION(S)

This application claims the benefit of United States Provisional Application No. 63/745,352, filed on January 15, 2025, the contents of which are hereby incorporated by reference herein for all purposes.

### TECHNICAL FIELD

The present disclosure relates generally to pumps for compressible gases, including compressors and vacuum pumps.

### BACKGROUND

Pumps for compressible gases may utilize a piston-cylinder type pumping mechanism. The number, sizes, and arrangement of the pistons and cylinders are determined according to desired performance specifications.

### SUMMARY

A first aspect of the disclosure is a modular pump for compressible gases. The modular pump includes a first pump module including a crankcase defining an interior space, a crankshaft extending along a crank axis and supported by the crankcase, a first cylinder assembly coupled to the crankcase and extending along a first cylinder axis that is perpendicular to the crank axis, and a second cylinder assembly coupled to the crankcase and extending along a second cylinder axis that is opposite the first cylinder axis. The modular pump further includes a second pump module arranged axially adjacent to the first pump module and including a crankshaft extending along the crank axis, and a coupler that connects the crankshaft of the first pump module to the crankshaft of the second pump module. The coupler defines an angular phase offset between the crankshaft of the first pump module and the crankshaft of the second pump module.

In some implementations of the modular pump according to the first aspect of the disclosure, the coupler further includes a first coupler hub coupled to an end portion of the crankshaft of the first pump module, a second coupler hub coupled to an end portion of the crankshaft of the second pump module, and a spider positioned axially between the first coupler hub and the second coupler hub. In some implementations of the coupler according to the first aspect of the disclosure, the spider includes a central body defining a bore aligned with the crank axis, and a plurality of arms extending radially outward from the central body, the plurality of arms engaging projections of each coupler hub. In some implementations of the coupler according to the first aspect of the disclosure, the first coupler hub and the second coupler hub each include projections that interfit with the plurality of arms of the spider such that rotational lash between the first coupler hub and the second coupler hub is inhibited. In some implementations of the coupler according to the first aspect of the disclosure, the spider is formed from a flexible material to allow for compliance.

In some implementations of the modular pump according to the first aspect of the disclosure, the angular phase offset is one of ninety degrees, one-hundred eighty degrees, or two-hundred seventy degrees.

In some implementations of the modular pump according to the first aspect of the disclosure, the first cylinder assembly of the first pump module further includes a guide tube coupled to the crankcase, a cylinder body coupled to the guide tube and defining a cylinder bore, and a cylinder head coupled to the cylinder body, wherein the guide tube is separate from the cylinder bore, is vented to atmosphere, and defines at least one vent port in fluid communication with atmosphere. In some implementations of the modular pump according to the first aspect of the disclosure, the modular pump further includes a piston including a guide portion reciprocating within the guide tube and a head portion reciprocating within the cylinder bore, wherein the piston is coupled to the crankshaft by a connecting rod and a wrist pin. In some implementations of the modular pump according to the first aspect of the disclosure, the modular pump further includes a plurality of fastener rods extending from the crankcase to the cylinder head, the plurality of fastener rods retaining the guide tube and the cylinder body between the crankcase and the cylinder head. In some implementations of the modular pump according to the first aspect of the disclosure, the cylinder head defines an inlet path, an outlet path, and a common flow path in fluid communication with both the inlet path and the outlet path and with a compression chamber defined by the cylinder bore.

In some implementations of the modular pump according to the first aspect of the disclosure, the first cylinder assembly has a first displacement and the second cylinder assembly has a second displacement different from the first displacement.

In some implementations of the modular pump according to the first aspect of the disclosure, the crankcase defines a plurality of radial openings configured to receive cylinder assemblies.

In some implementations of the modular pump according to the first aspect of the disclosure, the second pump module further includes a third cylinder assembly and a fourth cylinder assembly coupled to a crankcase of the second pump module and arranged in an opposed configuration about the crank axis.

In some implementations of the modular pump according to the first aspect of the disclosure, the first cylinder assembly and the second cylinder assembly are pneumatically connected in parallel or in series.

In some implementations of the modular pump according to the first aspect of the disclosure, the crankcase further includes a first crankcase portion and a second crankcase portion separable from one another along the crank axis and secured to one another by fasteners.

A second aspect of the disclosure is a pump module for compressible gases. The pump module includes a crankcase defining an interior space, a crankshaft extending along a crank axis and supported by the crankcase, a first cylinder assembly coupled to the crankcase and extending along a first cylinder axis that is perpendicular to the crank axis, and a second cylinder assembly coupled to the crankcase and extending along a second cylinder axis that is opposite the first cylinder axis. The first cylinder assembly includes a guide tube coupled to the crankcase, a cylinder body coupled to the guide tube and defining a cylinder bore, and a cylinder head coupled to the cylinder body, wherein the guide tube is separate from the cylinder bore and is vented to atmosphere.

In some implementations of the pump module according to the second aspect of the disclosure, the pump module further includes a piston of the first cylinder assembly, the piston including a guide portion reciprocating within the guide tube of the first cylinder assembly and a head portion reciprocating within the cylinder bore of the first cylinder assembly, wherein the piston is coupled to the crankshaft by a connecting rod and a wrist pin.

In some implementations of the pump module according to the second aspect of the disclosure, the pump module further includes a plurality of fastener rods extending from the crankcase to the cylinder head, the plurality of fastener rods retaining the guide tube and the cylinder body between the crankcase and the cylinder head.

In some implementations of the pump module according to the second aspect of the disclosure, the cylinder head defines an inlet path, an outlet path, and a common flow path in fluid communication with both the inlet path and the outlet path and with a compression chamber defined by the cylinder bore.

In some implementations of the pump module according to the second aspect of the disclosure, the second cylinder assembly further includes a guide tube coupled to the crankcase, a cylinder body coupled to the guide tube and defining a cylinder bore, and a cylinder head coupled to the cylinder body, wherein the guide tube of the second cylinder assembly is separate from the cylinder bore of the second cylinder assembly and is vented to atmosphere.

### BRIEF DESCRIPTION OF THE DRAWINGS

The disclosure is best understood from the following detailed description when read in conjunction with the accompanying drawings, provided by way of example only. It is emphasized that, according to common practice, the various features of the drawings are not to scale. On the contrary, the dimensions of the various features are arbitrarily expanded or reduced for clarity.
FIGS. 1A-1B are perspective view illustrations of a pump module according to an implementation.
FIG. 1C is a cross-section view taken along line A of FIGS. 1A-1B.
FIG. 2A is a cross-section detail view showing a crankcase of the pump module.
FIG. 2B is a cross-section detail view showing a first cylinder assembly of the pump module.
FIG. 2C is a cross-section detail view showing a cylinder head of the pump module.
FIG. 2D is a cross-section detail view showing the second cylinder assembly.
FIG. 3 is a graph showing torque characteristics of the pump module of FIGS. 1A-2D.
FIG. 4A is an exploded view illustration of a pump assembly.
FIG. 4B is an illustration of a coupler hub of the pump assembly of FIG. 4A.
FIG. 4C is an illustration of a spider of the pump assembly of FIG. 4A.
FIG. 5 is a graph showing torque characteristics of the pump assembly of FIGS. 4A-4C.
FIGS. 6A-6C are illustrations of example configurations for pump assemblies.

### DETAILED DESCRIPTION

The disclosure herein relates to a modular pump for compressible gases. The modular pump may be utilized as a compressor or as a vacuum pump. The disclosure herein further relates to pump modules that are configured to be used in a modular pump for compressible gases.

One aspect of the disclosure is a modular and configurable modular pump (e.g., compressor or vacuum pump) design that is adaptable to a wide range of applications. The pump designs described herein include pump modules having an opposed (e.g., horizontally opposed), reciprocating, two-cylinder configuration that operates as an oil-less single or dual-acting compressor. The module configuration allows for various bore sizes and displacements by utilizing common crankcase components, which allows the pump to be customized for the needs of a particular application. The cylinders of each pump module may be pneumatically connected in parallel for single-stage operation or in series for two-stage operation, accommodating both higher flow capacities and elevated working pressures based on application demands. The opposed two-cylinder configuration results in generation of two uniformly spaced and equal magnitude torque pulses per crank revolution, ensuring smooth and efficient operation.

In another aspect of the disclosure, two pump modules can be axially connected using a zero-lash phasing coupler, resulting in a pump that has four cylinders driven by a single rotational input. Connection of the two pump modules to one another by the zero-lash phasing coupler allows for control over the relative timing of the intake and exhaust strokes of the four cylinders during rotation of the crankshaft. The phasing coupler can connect the two pump modules in a manner that defines an angular phase offset. As an example, the two pump modules may be connected by the phasing coupler such that the crankshafts of the two modules are ninety-degrees out of phase, resulting in four symmetrically spaced torque pulses per crankshaft revolution. This configuration facilitates modular compound pumping arrangements where cylinders can be pneumatically connected in parallel for higher flow rates or in series for increased pressure stages. Examples of pump configurations that can be implemented by appropriate interconnection of input and output ports include a four-cylinder parallel flow configuration for a single stage of compression, two cylinders in parallel and two in series for two stages of compression, or a four-cylinder series configuration for four stages of compression.

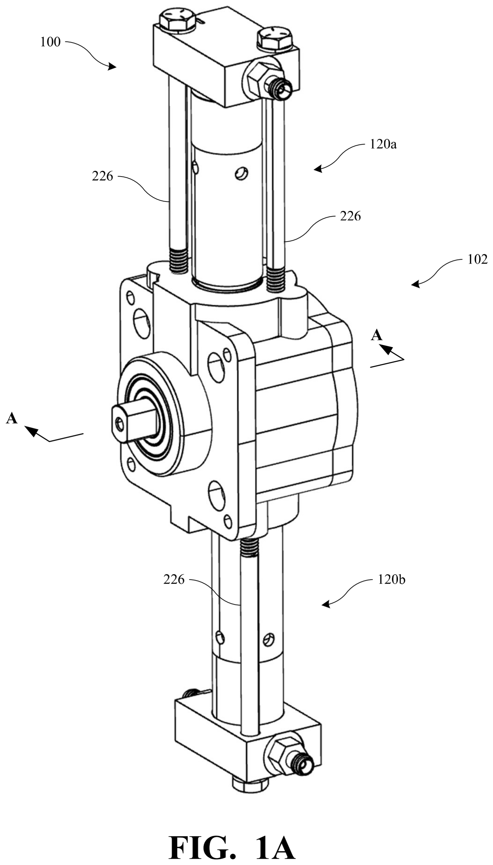

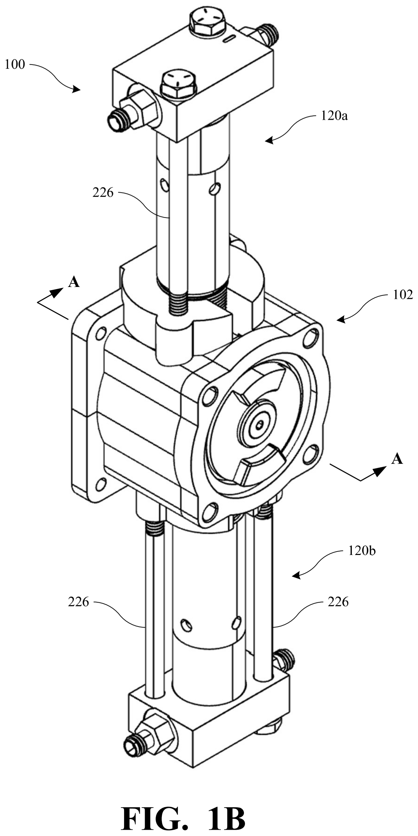

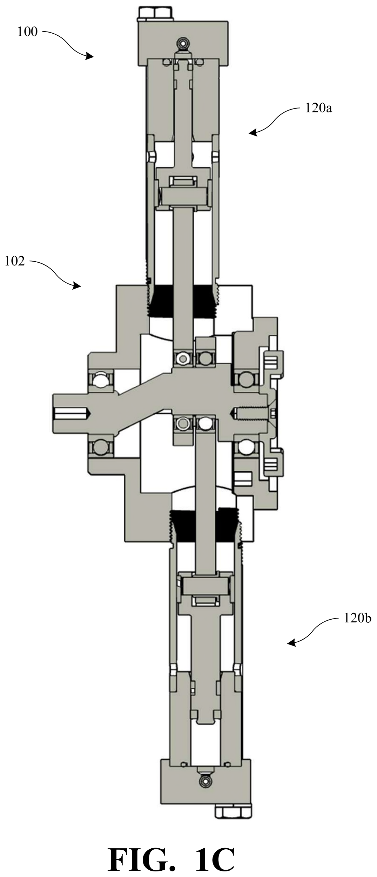

FIG. 1A and FIG. 1B are perspective view illustrations of a pump module 100 according to one implementation. FIG. 1C is a cross-section view taken along line A, which is shown in FIGS. 1A-1B. The pump module 100 utilizes a piston-cylinder pumping configuration having two pistons and two cylinders in an opposed configuration, such as a horizontally opposed configuration or a vertically opposed configuration. The pump module 100 is configured to receive and operate in response to a rotational input provided by a prime mover, such as an electric motor. The pump module 100 is also configured to be connectable to other similarly configured pump modules, which allows the number of piston-cylinder units included in a pumping system to be selected based on desired performance characteristics. In the illustrated implementation, the pump module 100 includes a crankcase 102, a first cylinder assembly 120a that is connected to the crankcase 102, and a second cylinder assembly 120b that is connected to the crankcase 102.

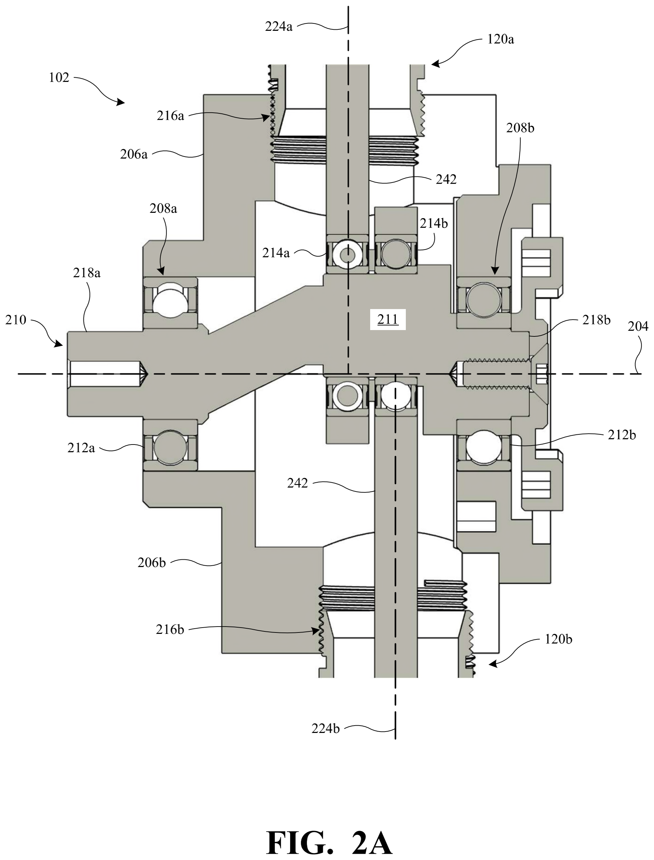

FIG. 2A is a cross-section detail view showing the crankcase 102. The crankcase 102 extends along a crank axis 204. The crankcase 102 includes walls that extend around and define an interior space. The crankcase 102 includes a first portion 206a (e.g., a first crankcase portion) and a second portion 206b (e.g., a second crankcase portion). The first portion 206a and the second portion 206b are separable to allow access to the interior space of the crankcase 102 and to allow assembly of components relative to the crankcase 102. As an example, the first portion 206a may be coupled to the second portion 206b by bolts or other suitable fasteners. In the illustrated implementation the first portion 206a of the crankcase 102 defines a first longitudinal opening 208a that is located along the crank axis 204 and extends through a wall of the crankcase 102. This location may be referred to as a first longitudinal end of the crankcase 102. The second portion 206b of the crankcase 102 defines a second longitudinal opening 208b that is located along the crank axis 204 and extends through a wall of the crankcase 102. This location may be referred to as a second longitudinal end of the crankcase 102.

The crankshaft 210 is located in the interior space of the crankcase 102 and extends along the crank axis 204. The crankshaft 210 extends from the first longitudinal opening 208a to the second longitudinal opening 208b of the crankcase 102. The crankshaft 210 is supported relative to the crankcase 102 by a first bearing 212a that is located in the first longitudinal opening 208a and is supported relative to the crankcase 102 by a second bearing 212b that is located in the second longitudinal opening 208b.

An off-axis portion 211 of the crankshaft 210 is spaced from the crank axis 204 and rotates around the crank axis 204 as the crankshaft 210 rotates on the crank axis. The off-axis portion 211 of the crankshaft 210 serves as a crank pin that is connectable to pistons in order to drive reciprocation. In the illustrated implementation, a first connecting rod bearing 214a is located on the off-axis portion 211 of the crankshaft 210 for connection of the first cylinder assembly 120a to the crankshaft 210, and a second connecting rod bearing 214b is located on the off-axis portion 211 of the crankshaft 210 for connection of the second cylinder assembly 120b to the crankshaft 210. In other implementations, multiple features may be defined by the crankshaft 210 to serve as crankpins and thereby allow for two or more of the cylinder assemblies to be arranged at a different phasing relative to one another instead of being one hundred and eighty degrees out of phase (e.g., an angular phase offset of one hundred and eighty degrees) as illustrated. Adjacent to the off-axis portion 211 of the crankshaft 210, a first radial opening 216a is defined by the crankcase 102 through the walls thereof and a second radial opening 216b is defined by the crankcase 102 through the walls thereof. To accommodate the opposed cylinder configuration, the first radial opening 216a and the second radial opening 216b are opposite one another, each facing outward from the crank axis 204 but in opposite directions. Thus, the crankcase 102 may define a plurality of radial openings, such as the first radial opening 216a and the second radial opening 216b, that are configured to receive cylinder assemblies.

A first end portion 218a of the crankshaft 210 lies along the crank axis 204 at the first longitudinal end of the crankcase 102 and a second end portion 218b of the crankshaft 210 lies along the crank axis 204 at a second longitudinal end of the crankcase 102. The first end portion 218a and the second end portion 218b are located outside of the crankcase 102 and are adjacent to the first longitudinal opening 208a and the second longitudinal opening 208b, respectively. The first end portion 218a and the second end portion 218b are located at least partly outward from the first bearing 212a and the second bearing 212b, respectively, and are engaged therewith to support the crankshaft 210 relative to the crankcase 102. The first end portion 218a and the second end portion 218b are each configured for connection to other components as will be described herein.

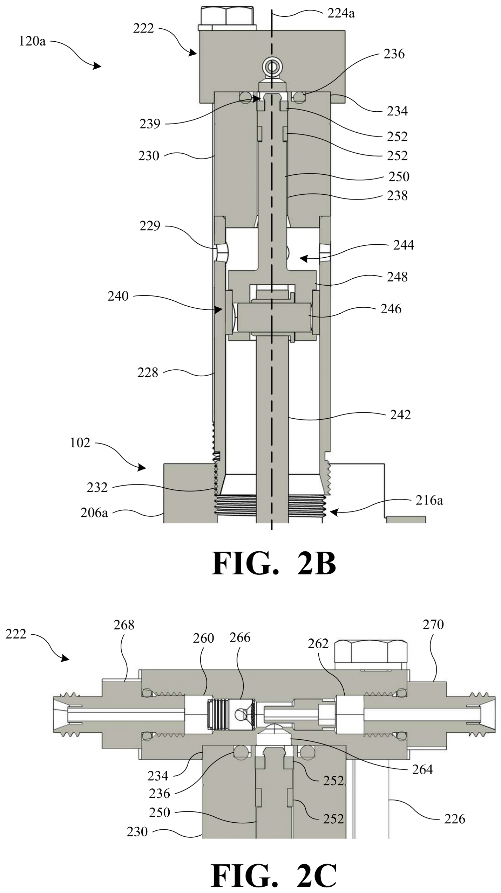

FIG. 2B is a cross-section detail view showing the first cylinder assembly 120a. The first cylinder assembly 120a extends from the crankcase 102 to a cylinder head 222 along a first cylinder axis 224a. The first cylinder axis 224a extends perpendicular to and radially outward from the crank axis 204. At an outer end of the first cylinder assembly 120a, the cylinder head 222 is coupled to the first cylinder assembly 120a and defines an inlet path and an outlet path for introduction of and expulsion of a working gas relative to the first cylinder assembly 120a. The cylinder head 222 is secured relative to the crankcase 102 by fastener rods 226 (FIGS. 1A-1B) that extend from the crankcase 102 to the cylinder head 222. As an example, the fastener rods 226 may be elongate bolts.

The first cylinder assembly includes a guide tube 228 and a cylinder body 230. The guide tube 228 is coupled to the crankcase 102 at the first radial opening 216a. In the illustrated example, a threaded coupling 232 is defined by the crankcase 102 and by the guide tube 228 to define a threaded connection of the guide tube 228 to the crankcase 102. The guide tube 228 is separate from the space in which the working gas is compressed and instead may be in communication with atmospheric pressure through vent ports 229 that are formed radially through the tubular wall of guide tube 228. At the opposite end of the guide tube 228 relative to the crankcase 102, the guide tube 228 is connected to the cylinder body 230. The outside diameters of the guide tube 228 and the cylinder body 230 are approximately the same (e.g., within manufacturing tolerances. In the illustrated implementation, the guide tube 228 is connected to the cylinder body 230 by a press fit, with a portion of the cylinder body 230 having a decreased diameter that allows it to extend into the guide tube 228 in contact with the interior periphery thereof, and with an end surface of the guide tube 228 engaged with a shoulder formed on the cylinder body 230.

The cylinder body 230 is secured relative to the guide tube 228 by engagement of the cylinder head 222 with an opposite end of the cylinder body 230, since the cylinder head 222 is retained relative to the crankcase 102 by the fastener rods 226. Thus, the guide tube 228 and the cylinder body 230 are secured between the crankcase 102 and the cylinder head 222 by the force applied to them by the fastener rods 226. In the illustrated implementation, the cylinder body 230 has a stepped configuration that allows the cylinder body 230 to engage a longitudinal end of the guide tube 228 and to extend slightly into the guide tube 228 to maintain alignment of the cylinder body 230 and the guide tube 228 along the first cylinder axis 224a.

To couple the cylinder body 230 to the cylinder head 222, a recess 234 is formed in a surface of the cylinder head 222 and faces toward the cylinder body 230. The recess 234 has a shape that matches outer periphery shape of the cylinder body 230 (e.g., circular in the illustrated implementation) and is equivalent is size so that the cylinder body 230 may extend into the recess 234 and engage it at the outer periphery of the cylinder body 230 to align the cylinder body 230 with respect to the cylinder head 222 and to prevent relative movement of the two components. A seal 236 is located between the cylinder head 222 and the cylinder body 230 in order to define a space inside the cylinder body 230 that is able to be pressurized to allow pumping of the working gas. As an example, the seal 236 may be located in a groove formed in an end surface of the cylinder body 230 such that the seal is engaged with a compressed between the cylinder head 222 and the cylinder body 230. The cylinder body 230 also includes a cylinder bore 238 that defines an internal space 239 that serves as a compression chamber, as will be described herein.

A piston assembly 240 of the first cylinder assembly 120a includes a connecting rod 242 and a piston 244. A first end of the connecting rod 242 is connected to the off-axis portion 211 of the crankshaft 210 by the first connecting rod bearing 214a to allow rotation of the crankshaft 210 relative to the connecting rod 242. A second end of the connecting rod 242 is connected to the piston 244 by a wrist pin 246 to allow pivoting of the connecting rod 242 relative to the piston 244 when the piston 244 reciprocates in response to rotation of the crankshaft 210 through the connection of the piston 244 to the crankshaft 210 by the connecting rod 242.

The piston 244 includes a guide portion 248 and a head portion 250. The guide portion 248 of the piston 244 is located in the guide tube 228 and reciprocates therein in response to rotation of the crankshaft 210. At a lower side (e.g., facing the crank axis 204) of the guide portion 248, the guide portion 248 includes features (e.g., a transverse bore) through which the piston 244 is coupled to connecting rod 242 by the wrist pin 246. The guide portion 248 is generally cylindrical and has an outer periphery that is equivalent in shape and size to an inner periphery of the guide tube 228, thereby allowing the guide portion 248 to slide within the guide tube 228. The exterior periphery of the guide portion 248 is engaged with the interior surface of the guide tube 228 either directly or indirectly, for example, through an annular bushing 249 that is coupled to and extends around the guide portion 248 and engages the interior surface of the guide tube 228.

The head portion 250 of the piston 244 is positioned in a cylinder bore 238 defined by the cylinder body 230 and is configured to compress the working gas within an internal space 239 defined by the cylinder bore 238 during its reciprocation. The internal space 239 is located within the cylinder bore 238, defined between the head portion 250 of the piston 244 and the cylinder head 222, and therefore changes in volume as the head portion 250 of the piston 244 moves along the first cylinder axis 224a in response to rotation of the crankshaft 210. It serves as the primary chamber for gas compression during the reciprocating motion of the piston 244. The head portion 250 may include grooves that have sealing rings 252 disposed in them. The sealing rings 252 are configured to maintain pressure of the working gas within the internal space 239 by sealing the interface between the cylinder bore 238 and the head portion 250 of the piston 244.

FIG. 2C is a cross-section detail view showing the cylinder head 222. The cylinder head 222 incorporates an inlet path 260 and an outlet path 262 to allow intake and exhaust of the working gas. In the illustrated example, the inlet path 260 and the outlet path 262 are defined along a bore that extends through the cylinder head 222 along an axis transverse to the first cylinder axis 224a. The inlet path 260 and outlet path 262 are in fluid communication with the internal space 239 of the cylinder body 230 by a common flow path 264 that facilitates both intake and exhaust functions. The common flow path164a extends transverse to the inlet path 260 and outlet path 262 and extends to the internal space 239 of the cylinder bore 238. The flow directions of the inlet path 260 and/or the outlet path 262 may be regulated by one-way flow valves (e.g., one or more). In the illustrated example, a one-way flow valve 266 is positioned along the inlet path 260, allowing the working gas to enter the internal space 239 while preventing backflow when the working gas is exhausted. In some implementations, a second one-way valve may be located along the outlet path 262. An inlet coupler 268 is located at an outer end of the inlet path 260, and an outlet coupler 270 is positioned at the outer end of the outlet path 262. The inlet path 260 and outlet path 262 are configured for connection to gas lines via the inlet coupler 268 and the outlet coupler 270, as will be described.

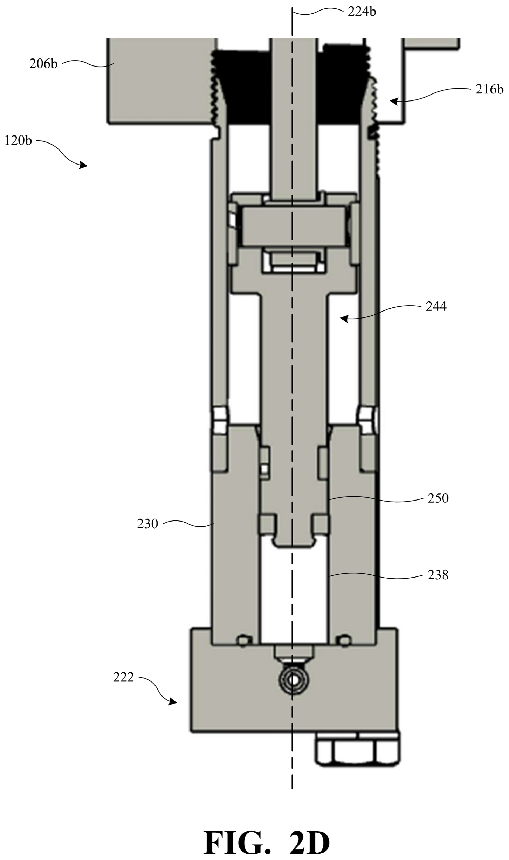

FIG. 2D is a cross-section detail view showing the second cylinder assembly 120b. The second cylinder assembly 120b is coupled to the crankcase 102 at the second radial opening 216b. The second cylinder assembly 120b extends along a second cylinder axis 224b. The second cylinder axis 224b extends perpendicular to and radially outward from the crank axis 204. The angular orientation of the second cylinder axis 224b is one-hundred and eighty degrees from the angular orientation of the first cylinder axis 224a as measured within a plane that is perpendicular to the crank axis 204. In the illustrated implementation, the first cylinder axis 224a and the second cylinder axis 224b are spaced from one another along the crank axis 204. The second cylinder assembly 120b may be configured in the same manner as described with respect to the first cylinder assembly 120a and may include all of the same components.

The geometric configurations of some of the components of the second cylinder assembly 120b may differ from those of the first cylinder assembly 120a. As an example, the displacement of the second cylinder assembly 120b (e.g., the amount of the working fluid pumped per stroke) may differ from the displacement of the first cylinder assembly 120a. This may be accomplished by changing the diameter of the cylinder bore 238 of the cylinder body 230 and the head portion 250 of the piston 244 of the second cylinder assembly 120b relative to the diameter of the cylinder bore 238 of the cylinder body 230 and the head portion 250 of the piston 244 of the first cylinder assembly 120a. In the illustrated implementation, the second cylinder assembly 120b has a larger displacement than the first cylinder assembly 120a as a result of larger diameters for these components. The difference in displacement may allow for multi-stage pumping configurations (either in compression or vacuum configurations. Other components of the first cylinder assembly 120a and the second cylinder assembly 120b may retain the same geometries to allow for interchangeability and modularity of those parts.

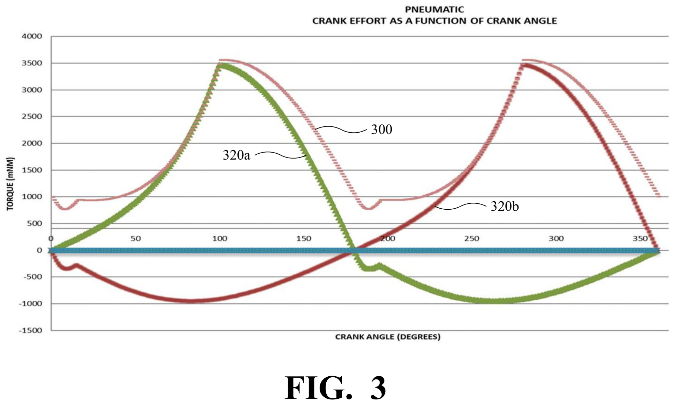

FIG. 3 is a graph showing torque characteristics of the pump module of FIGS. 1A-2D. The crank angle of the crankshaft 210 is shown on the X-axis and torque is shown on the Y-axis. A first line 320a shows the torque required to drive the first cylinder assembly 120a as a function of the crank angle of the crankshaft 210. A second line 320b shows the torque required to drive the second cylinder assembly 120b as a function of the crank angle of the crankshaft 210. A third line 300 shows the combined torque required to drive the first cylinder assembly 120a and the second cylinder assembly 120b as a function of the crank angle of the crankshaft 210. As shown by the third line 300, the configuration of the pump module 100 yields two uniformly spaced and equal magnitude torque pulses per crank revolution of the crankshaft 210.

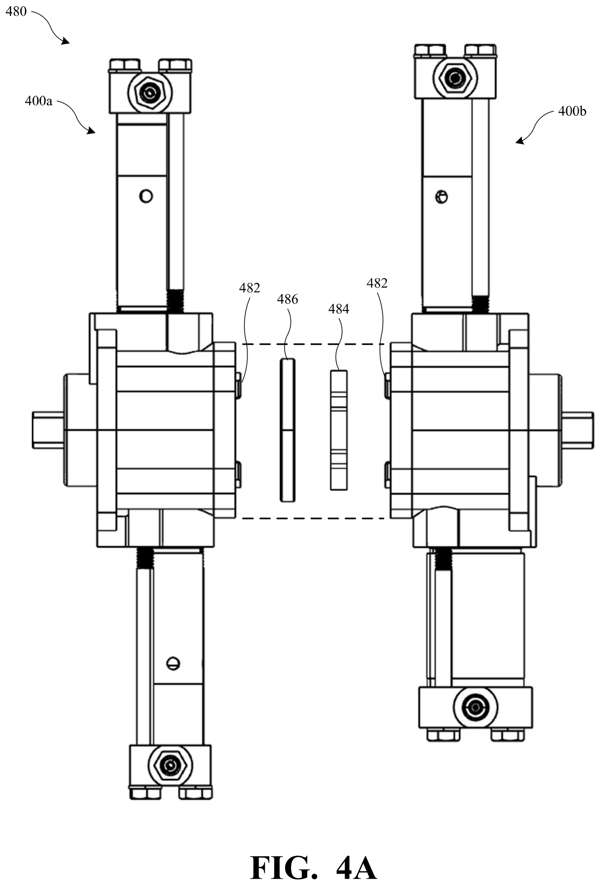

FIG. 4A is an exploded view illustration of a pump assembly 480 that includes a first pump module 400a and a second pump module 400b that are connected to each other for rotation in unison. The first pump module 400a and the second pump module 400b may be secured to one another by fasteners (e.g., bolts) that extend into or through their respective housings, or by other means. The first pump module 400a and the second pump module 400b may be implemented in the manner described with respect to the pump module 100 and may include the same components. Thus, a rotational input applied to the crankshaft 210 of one of the first pump module 400a or the second pump module 400b drives the crankshaft 210 of the other one. In the illustrated implementation, a spider or jaw coupler (e.g., a Lovejoy coupler) is used to connect the first pump module 400a and the second pump module 400b for uniform rotation. Use of this type of coupler allows the phase timing of the first pump module 400a relative to the second pump module 400b to be adjusted, e.g., by rotating the crankshaft 210 of one of the pump modules by ninety, one-hundred eighty, or two-hundred seventy degrees relative to the other one, thereby change the relative intake and exhaust timings of the piston-cylinder units thereof.

In the illustrated implementation, a coupler hub 482 is coupled to one of the first end portion 218a or the second end portion 218b of the crankshaft 210 of each of the first pump module 400a and the second pump module 400b. A spider 484 is located between the coupler hub 482 of the first pump module 400a and the coupler hub 482 of the second pump module 400b and is located within an interface ring 486 that extends arounds the spider 484 between the coupler hubs to define a space between the first pump module 400a and the second pump module 400b to accommodate the spider 484.

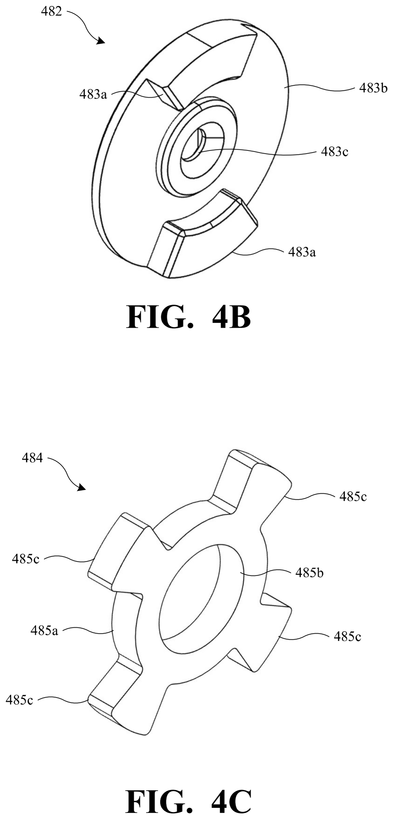

As seen in FIG. 4B, the coupler hub 482 includes projections 483a that are engageable with the spider 484. The projections 483a extend axially (in the direction of a rotation axis of the coupler hub 482) from a base portion 483b of the coupler hub 482. The base portion 483b is generally disk-shaped. There are two of the projections 483a in the illustrated implementation, but the number of the projections 483a may be changed. The coupler hub 482 also includes a bore 483c that extends through the base portion 483b along the rotation axis of the coupler hub 482 to connect the coupler hub 482 to an end portion of the crankshaft 210 of one of the first pump module 400a or the second pump module 400b by a fastener (e.g., a bolt) or other means.

As seen in FIG. 4C, the spider 484 includes a central body 485a, which may be a circular body. The central body 485a defines a bore 485b that is located along a rotation axis of the spider 484. The spider 484 is configured to connect to the coupler hub 482 of the first pump module 400a and the coupler hub 482 of the second pump module 400b so that the rotation axis of the spider 484, the coupler hubs, and the crankshaft 210 of each of the first pump module 400a and the second pump module 400b are in alignment (e.g., defining a common rotation axis). The spider 484 includes arms 485c that extend radially outward from the central body 485a and therefor extend radially outward from the rotation axis of the spider 484. There are four of the arms 485c in the illustrated implementation, but the number may be changed. The arms 485c are configured to engage the projections 483a of the coupler hub 482 of each of the first pump module 400a and the second pump module 400b. This engagement allows the spider 484 to transmit torque between the coupler hub 482 of the first pump module 400a and the coupler hub 482 of the second pump module 400b and thereby cause their crankshafts to rotate in unison. The spider 484 may be formed from a flexible material (e.g., an elastomeric material) to allow for compliance in the connection between the first pump module 400a and the second pump module 400b. Thus, a first coupler hub and a second coupler hub, such as the coupler hub 482 of the first pump module 400a and the coupler hub 482 of the second pump module 400b, may each include the projections 483a, which interfit with a plurality of arms of the spider 484, such as the arms 485c, such that rotational lash between the first coupler hub and the second coupler hub is inhibited.

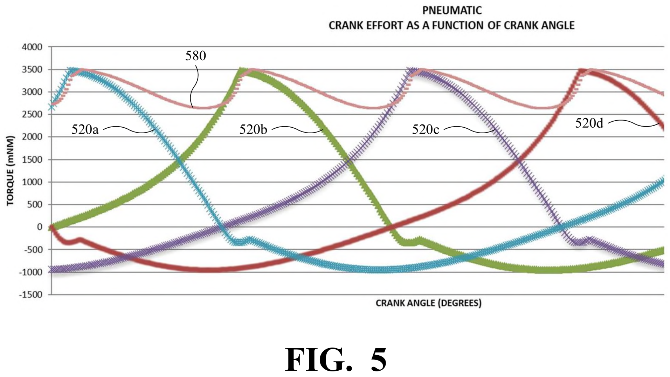

FIG. 5 is a graph showing torque characteristics of the pump assembly 480 of FIGS. 4A-4C. The crank angle is shown on the X-axis, and torque is shown on the Y-axis. A first line 520a, a second line 520b, a third line 520c, and a fourth line 520d show the torque required to drive first through fourth cylinder assemblies, respectively, of the pump assembly 480. A fifth line 580 shows the combined torque required to drive the pump assembly 480 as a function of the crank angle. As shown by the fifth line 580, the configuration of the pump assembly 480 may yield four uniformly spaced and equal magnitude torque pulses per crank revolution of the crankshaft in some implementations, dependent on the cylinder sizes, series versus parallel configuration, and phasing angle.

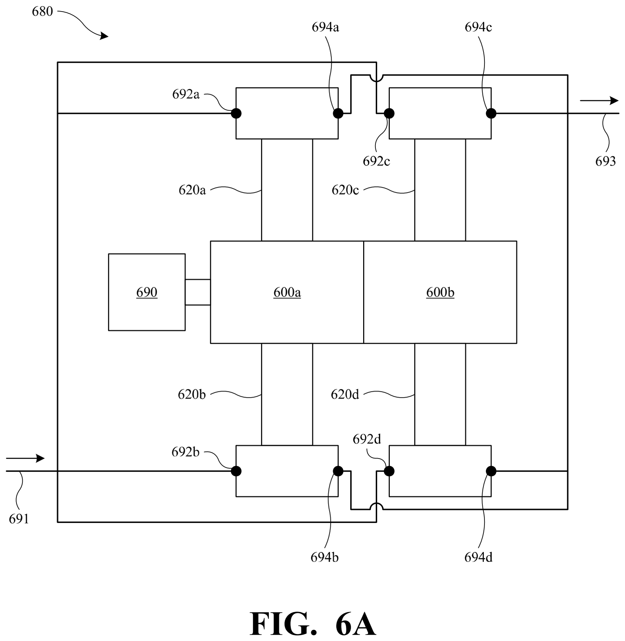

FIG. 6A is a schematic illustration of an example of a pump assembly 680 in a four-cylinder parallel flow configuration. The pump assembly 680 is implemented in the manner described with respect to the pump assembly 480 and the pump module 100. In the description herein, the pump assembly 680 is configured as an air compressor, but the same configuration could be used to implement a vacuum pump. In this configuration, a first pump module 600a and a second pump module 600b are connected to one another for uniform rotation of their crankshafts, and are driven by a rotational input provided by a rotary electric motor 690 that is connected directly or indirectly (e.g., by a belt drive, a gearbox, etc.) to the crankshaft of one of the first pump module 600a or the second pump module 600b. The first pump module 600a and the second pump module 600b may be connected ninety degrees out of phase with respect to each other. The first pump module 600a includes a first cylinder assembly 620a and a second cylinder assembly 620b that are one-hundred eighty degrees out of phase. The first cylinder assembly 620a has a first inlet port 692a and a first outlet port 694a. The second cylinder assembly 620b has a second inlet port 692b and a second outlet port 694b. The second pump module 600b includes a third cylinder assembly 620c and a fourth cylinder assembly 620d that are one-hundred eighty degrees out of phase. The third cylinder assembly 620c has a third inlet port 692c and a third outlet port 694c. The fourth cylinder assembly 620d has a fourth inlet port 692d and a fourth outlet port 694d.

In the four-cylinder parallel flow configuration, an inlet line 691 receives ambient air and supplies it to the first inlet port 692a, the second inlet port 692b, the third inlet port 692c and the fourth inlet port 692d. An outlet line 693 receives compressed air from the first outlet port 694a, the second outlet port 694b, the third outlet port 694c, and the fourth outlet port 694d. The outlet line 693 may be connected to a high-pressure air consumer, an air tank, or other device that is configured to utilize a supply of pressurized air.

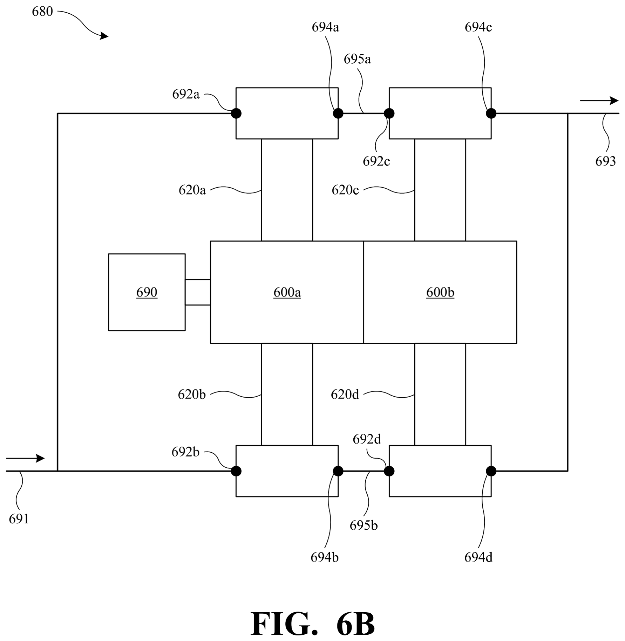

FIG. 6B is a schematic illustration of an example of the pump assembly 680 in a four-cylinder, two parallel, two series configuration. This configuration implements two stage compression along two separate paths. In the illustrated implementation, the inlet line 691 is connected to the first inlet port 692a and to the second inlet port 692b to supply ambient air to the first cylinder assembly 620a and the second cylinder assembly 620b. A first intermediate line 695a is connected to the first outlet port 694a and to the third inlet port 692c to transfer air pressurized by the first cylinder assembly 620a to the third cylinder assembly 620c. The third outlet port 694c of the third cylinder assembly 620c is connected to the outlet line 693. A second intermediate line 695b is connected to the second outlet port 694b and to the fourth inlet port 692d to transfer air that was pressurized by the second cylinder assembly 620b to the fourth cylinder assembly 620d. The fourth outlet port 694d of the fourth cylinder assembly 620d is connected to the outlet line 693. Thus, along a first compression path, the ambient air from the inlet line 691 is first compressed by the first cylinder assembly 620a, then further compressed by the third cylinder assembly 620c, then supplied to the outlet line 693. Similarly, along a second compression path, the ambient air from the inlet line 691 is first compressed by the second cylinder assembly 620b, then further compressed by the fourth cylinder assembly 620d, then supplied to the outlet line 693.

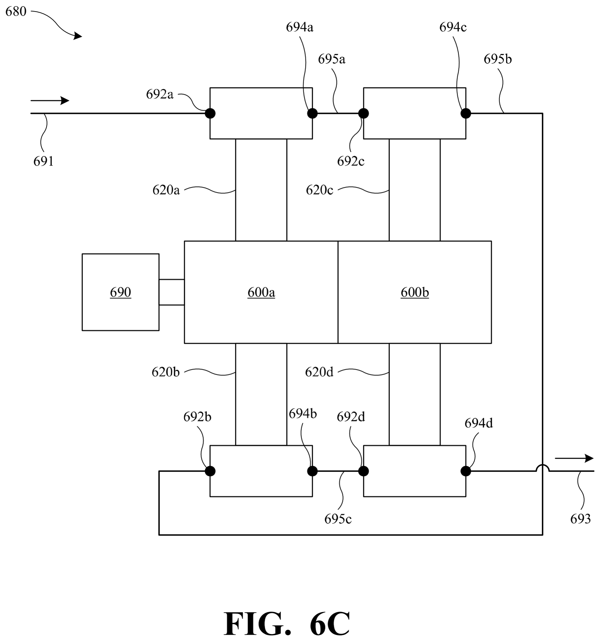

FIG. 6C is a schematic illustration of an example of the pump assembly 680 in a four-cylinder series configuration. This configuration implements four stage compression along a single compression path. In the illustrated implementation, the inlet line 691 is connected to the first inlet port 692a to allow compression of the working gas by the first cylinder assembly 620a of the first pump module 600a. The first outlet port 694a is connected to the third inlet port 692c by the first intermediate line 695a to transfer the gas compressed by the first cylinder assembly 620a to the third cylinder assembly 620c of the second pump module 600b. The working gas is further compressed by the third cylinder assembly 620c of the second pump module 600b and then transferred to the second cylinder assembly 620b of the first pump module 600a by the second intermediate line 695b, which connects the third outlet port 694c to the second inlet port 692b. The working gas is further compressed by the second cylinder assembly 620b of the first pump module 600a and then transferred to the fourth cylinder assembly 620d of the second pump module 600b by a third intermediate line 695c, which connects the second outlet port 694b to the fourth inlet port 692d. After compression by the fourth cylinder assembly 620d of the second pump module 600b, the working gas exits the pump assembly via the outlet line 693, which is connected to the fourth outlet port 694d of the fourth cylinder assembly 620d.

Example implementations are set forth on the following clauses.

Clause 1. A modular pump for compressible gases, comprising: a first pump module comprising: a crankcase defining an interior space; a crankshaft extending along a crank axis and supported by the crankcase; a first cylinder assembly coupled to the crankcase and extending along a first cylinder axis that is perpendicular to the crank axis; a second cylinder assembly coupled to the crankcase and extending along a second cylinder axis that is opposite the first cylinder axis; a second pump module arranged axially adjacent to the first pump module and comprising a crankshaft extending along the crank axis; and a coupler that connects the crankshaft of the first pump module to the crankshaft of the second pump module, wherein the coupler defines an angular phase offset between the crankshaft of the first pump module and the crankshaft of the second pump module.

Clause 2. The modular pump of clause 1, wherein the coupler comprises: a first coupler hub coupled to an end portion of the crankshaft of the first pump module; a second coupler hub coupled to an end portion of the crankshaft of the second pump module; and a spider positioned axially between the first coupler hub and the second coupler hub.

Clause 3. The modular pump of clause 2, wherein the spider includes a central body defining a bore aligned with the crank axis, and a plurality of arms extending radially outward from the central body, the plurality of arms engaging projections of each coupler hub.

Clause 4. The modular pump of clause 3, wherein the first coupler hub and the second coupler hub each include projections that interfit with the plurality of arms of the spider such that rotational lash between the first coupler hub and the second coupler hub is inhibited.

Clause 5. The modular pump of clause 2 or 3, wherein the spider is formed from a flexible material to allow for compliance.

Clause 6. The modular pump of clause 1, wherein the angular phase offset is one of ninety degrees, one-hundred eighty degrees, or two-hundred seventy degrees.

Clause 7. The modular pump of any preceding clause, wherein the first cylinder assembly of the first pump module comprises: a guide tube coupled to the crankcase; a cylinder body coupled to the guide tube and defining a cylinder bore; and a cylinder head coupled to the cylinder body, wherein the guide tube is separate from the cylinder bore, is vented to atmosphere, and defines at least one vent port in fluid communication with atmosphere.

Clause 8. The modular pump of any preceding clause, further comprising a piston including a guide portion reciprocating within the guide tube and a head portion reciprocating within the cylinder bore, wherein the piston is coupled to the crankshaft by a connecting rod and a wrist pin.

Clause 9. The modular pump of clause 7 or 8, further comprising a plurality of fastener rods extending from the crankcase to the cylinder head, the plurality of fastener rods retaining the guide tube and the cylinder body between the crankcase and the cylinder head.

Clause 10. The modular pump of any of clauses 7-9, wherein the cylinder head defines an inlet path, an outlet path, and a common flow path in fluid communication with both the inlet path and the outlet path and with a compression chamber defined by the cylinder bore.

Clause 11. The modular pump of any preceding clause, wherein the first cylinder assembly has a first displacement and the second cylinder assembly has a second displacement different from the first displacement.

Clause 12. The modular pump of any preceding clause, wherein the crankcase defines a plurality of radial openings configured to receive cylinder assemblies.

Clause 13. The modular pump of any preceding clause, wherein the second pump module comprises a third cylinder assembly and a fourth cylinder assembly coupled to a crankcase of the second pump module and arranged in an opposed configuration about the crank axis.

Clause 14. The modular pump of any preceding clause, wherein the first cylinder assembly and the second cylinder assembly are pneumatically connected in parallel or in series.

Clause 15. The modular pump of any preceding clause, wherein the crankcase comprises a first crankcase portion and a second crankcase portion separable from one another along the crank axis are secured to one another by fasteners.

Clause 16. A pump module for compressible gases, comprising: a crankcase defining an interior space; a crankshaft extending along a crank axis and supported by the crankcase; a first cylinder assembly coupled to the crankcase and extending along a first cylinder axis that is perpendicular to the crank axis; and a second cylinder assembly coupled to the crankcase and extending along a second cylinder axis that is opposite the first cylinder axis, wherein the first cylinder assembly comprises a guide tube coupled to the crankcase, a cylinder body coupled to the guide tube and defining a cylinder bore, and a cylinder head coupled to the cylinder body, wherein the guide tube is separate from the cylinder bore and is vented to atmosphere.

Clause 17. The pump module of clause 16, further comprising a piston of the first cylinder assembly, the piston including a guide portion reciprocating within the guide tube of the first cylinder assembly and a head portion reciprocating within the cylinder bore of the first cylinder assembly, wherein the piston is coupled to the crankshaft by a connecting rod and a wrist pin.

Clause 18. The pump module of clause 16 or 17, further comprising a plurality of fastener rods extending from the crankcase to the cylinder head, the plurality of fastener rods retaining the guide tube and the cylinder body between the crankcase and the cylinder head.

Clause 19. The pump module of any of clauses 16-18, wherein the cylinder head defines an inlet path, an outlet path, and a common flow path in fluid communication with both the inlet path and the outlet path and with a compression chamber defined by the cylinder bore.

Clause 20. The pump module of any of clauses 16-19, wherein the second cylinder assembly comprises: a guide tube coupled to the crankcase; a cylinder body coupled to the guide tube and defining a cylinder bore; and a cylinder head coupled to the cylinder body, wherein the guide tube of the second cylinder assembly is separate from the cylinder bore of the second cylinder assembly and is vented to atmosphere.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. A modular pump for compressible gases, comprising:
a first pump module comprising:
a crankcase defining an interior space;
a crankshaft extending along a crank axis and supported by the crankcase;
a first cylinder assembly coupled to the crankcase and extending along a first cylinder axis that is perpendicular to the crank axis;
a second cylinder assembly coupled to the crankcase and extending along a second cylinder axis that is opposite the first cylinder axis;
a second pump module arranged axially adjacent to the first pump module and comprising a crankshaft extending along the crank axis; and
a coupler that connects the crankshaft of the first pump module to the crankshaft of the second pump module,
wherein the coupler defines an angular phase offset between the crankshaft of the first pump module and the crankshaft of the second pump module.

2. The modular pump of claim 1, wherein the coupler comprises:
a first coupler hub coupled to an end portion of the crankshaft of the first pump module;
a second coupler hub coupled to an end portion of the crankshaft of the second pump module; and
a spider positioned axially between the first coupler hub and the second coupler hub.

3. The modular pump of claim 2, wherein the spider includes a central body defining a bore aligned with the crank axis, and a plurality of arms extending radially outward from the central body, the plurality of arms engaging projections of each coupler hub.

4. The modular pump of claim 3, wherein the first coupler hub and the second coupler hub each include projections that interfit with the plurality of arms of the spider such that rotational lash between the first coupler hub and the second coupler hub is inhibited.

5. The modular pump of claim 2 or 3, wherein the spider is formed from a flexible material to allow for compliance.

6. The modular pump of any preceding claim, wherein the angular phase offset is one of ninety degrees, one-hundred eighty degrees, or two-hundred seventy degrees.

7. The modular pump of any preceding claim, wherein the first cylinder assembly of the first pump module comprises:
a guide tube coupled to the crankcase;
a cylinder body coupled to the guide tube and defining a cylinder bore; and
a cylinder head coupled to the cylinder body,
wherein the guide tube is separate from the cylinder bore, is vented to atmosphere, and defines at least one vent port in fluid communication with atmosphere.

8. The modular pump of claim 7, further comprising a piston including a guide portion reciprocating within the guide tube and a head portion reciprocating within the cylinder bore, wherein the piston is coupled to the crankshaft by a connecting rod and a wrist pin.

9. The modular pump of claim 7 or 8, further comprising a plurality of fastener rods extending from the crankcase to the cylinder head, the plurality of fastener rods retaining the guide tube and the cylinder body between the crankcase and the cylinder head.

10. The modular pump of any of claims 7-9, wherein the cylinder head defines an inlet path, an outlet path, and a common flow path in fluid communication with both the inlet path and the outlet path and with a compression chamber defined by the cylinder bore.

11. The modular pump of any preceding claim, wherein the first cylinder assembly has a first displacement and the second cylinder assembly has a second displacement different from the first displacement.

12. The modular pump of any preceding claim, wherein the crankcase defines a plurality of radial openings configured to receive cylinder assemblies.

13. The modular pump of any preceding claim, wherein the second pump module comprises a third cylinder assembly and a fourth cylinder assembly coupled to a crankcase of the second pump module and arranged in an opposed configuration about the crank axis.

14. The modular pump of any preceding claim, wherein the first cylinder assembly and the second cylinder assembly are pneumatically connected in parallel or in series.

15. The modular pump of any preceding claim, wherein the crankcase comprises a first crankcase portion and a second crankcase portion separable from one another along the crank axis are secured to one another by fasteners.
